(19) Europäisches Patentamt
European Patent Office
Office européen des brevets

(11) **EP 4 501 976 A1**

(12) **EUROPEAN PATENT APPLICATION**
published in accordance with Art. 153(4) EPC

(43) Date of publication:
**05.02.2025 Bulletin 2025/06**

(21) Application number: **23780479.4**

(22) Date of filing: **28.03.2023**

(51) International Patent Classification (IPC):
*C08F 10/06* (2006.01)     *C08F 4/654* (2006.01)
*C08F 4/658* (2006.01)

(52) Cooperative Patent Classification (CPC):
**C08F 4/654; C08F 4/658; C08F 10/06**

(86) International application number:
**PCT/JP2023/012416**

(87) International publication number:
**WO 2023/190470 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.03.2022  JP 2022056695**

(71) Applicant: **Sumitomo Chemical Company, Limited
Tokyo 103-6020 (JP)**

(72) Inventors:
• **TAKAOKI, Kazuo
Ichihara-shi, Chiba 299-0195 (JP)**
• **FUKUHARA, Shohei
Ichihara-shi, Chiba 299-0195 (JP)**
• **IMAI, Tsutomu
Ichihara-shi, Chiba 299-0195 (JP)**
• **KUMAMOTO, Shinichi
Ichihara-shi, Chiba 299-0195 (JP)**

(74) Representative: **Global IP Europe
Patentanwaltskanzlei
Pfarrstraße 14
80538 München (DE)**

(54) **METHOD FOR PRODUCING PROPYLENE POLYMER MATERIAL**

(57)     Provided is a propylene polymer material that can be suitably used in a molding step requiring a low viscosity and a high fluidity, that has a small molecular weight distribution, and that has a near-white color that can be used in various applications.

A method for manufacturing a propylene polymer material, the method comprising:

a continuous supply step of continuously supplying propylene, an olefin polymerization solid catalyst component, an organoaluminum compound, and an organozinc compound to a reactor; and

a continuous extraction step of continuously extracting a part of a propylene polymer material obtained in the reactor from the reactor.

EP 4 501 976 A1

**Description**

TECHNICAL FIELD

The present invention relates to a method for manufacturing a propylene polymer material using a Ziegler-Natta catalyst and an organozinc compound, and a propylene polymer material. The propylene polymer material is excellent in rigidity, tensile strength, heat resistance, chemical resistance, optical characteristics, processability, and the like, and has a low specific gravity, and thus is used as a material for home electric appliance parts, packaging materials, daily goods, automobile parts, and the like, and its use is diverse.

BACKGROUND ART

Conventionally, many olefin polymerization catalysts have been proposed, and various olefin-based polymers have been manufactured. In particular, a Ziegler-Natta (ZN) type olefin polymerization catalyst (hereinafter, also referred to as a ZN catalyst) is well known in the field of a polymer, and generally contains at least one catalyst component formed from transition metal compounds of Groups 4 to 6 of the Periodic Table (IUPAC, Nomenclature of Inorganic Chemistry, 1989), metal compounds of Groups 1 to 3 of the Periodic Table (IUPAC), and optionally compounds of Group 13 of the Periodic Table (IUPAC) and/or internal donor compounds. The ZN catalyst may further contain a catalyst component such as a co-catalyst and/or an external donor.

For example, Patent Document 1 describes an olefin polymer manufactured by a catalyst containing a Ziegler-Natta catalyst and an organozinc compound.

PRIOR ART DOCUMENTS

PATENT DOCUMENT

Patent Document 1: JP-A-2001-342210

DISCLOSURE OF THE INVENTION

PROBLEMS TO BE SOLVED BY THE INVENTION

An olefin-based polymer to be manufactured is applied to various applications. In order to be suitably used in a molding step requiring a low viscosity and a high fluidity, the olefin-based polymer preferably has a small molecular weight distribution, and contributes to, for example, stability of nozzle pressure in a spinning step and uniformity of filament fineness. In addition, a polymer component having a very low molecular weight may cause smoking or odor at the time of processing or may decrease the strength of a compact, and a polymer containing a relatively small amount of such a component and having a small molecular weight distribution is useful. Furthermore, the olefin-based polymer preferably has a near-white color so as to be used for various applications. However, Patent Document 1 does not mention the molecular weight distribution and color of the olefin-based polymer.

Under such circumstances, a problem to be solved by the present invention is to provide a propylene polymer material that can be suitably used in a molding step requiring a low viscosity and a high fluidity, that has a small molecular weight distribution, and that has a near-white color that can be used in various applications.

MEANS FOR SOLVING THE PROBLEMS

The present inventor has made intensive studies in view of such a background, and has completed the present invention.

That is, the present invention is as follows.

[1] A method for manufacturing a propylene polymer material, the method including:

a continuous supply step of continuously supplying propylene, an olefin polymerization solid catalyst component, an organoaluminum compound, and an organozinc compound to a reactor; and
a continuous extraction step of continuously extracting a part of a propylene polymer material obtained in the reactor from the reactor.

[2] The method for manufacturing a propylene polymer material according to [1], in which a supply rate of the organozinc compound in the continuous supply step to a generation rate of the propylene polymer material in the continuous extraction step is 20 to 1000 (mmol-Zn/kg-PP).

[3] The method for manufacturing a propylene polymer material according to [1] or [2], in which a supply rate of the organozinc compound to a supply rate of the organoaluminum compound is 1.1 to 15 (mol-Zn/mol-Al) in the continuous supply step.

[4] The method for manufacturing a propylene polymer material according to any one of [1] to [3], in which a supply rate of the organoaluminum compound in the continuous supply step to a generation rate of the propylene polymer material in the continuous extraction step is 1 to 30 (mmol-Al/kg-PP).

[5] The method for manufacturing a propylene polymer material according to any one of [1] to [4], in which the olefin polymerization solid catalyst component contains a titanium atom and a magnesium atom.

[6] The method for manufacturing a propylene polymer material according to any one of [1] to [5], in which the organoaluminum compound and the organozinc compound are continuously supplied to the reactor using separate lines in the continuous supply step.

[7] The method for manufacturing a propylene polymer material according to any one of [1] to [6], in which a hydrogen gas is further continuously supplied to the reactor in the continuous supply step.

[8] A propylene polymer material having (A) of 0.010 or more and (B)/(A) of 0.40 or more in the following (A) and (B):

(A) A ratio of the number of organic metal-containing terminal groups to the number of starting terminals of the propylene polymer materials

(B) A ratio of the number of organic metal-containing terminal groups to the number of starting terminals of a specific high molecular weight fraction of the propylene polymer material

[9] The propylene polymer material according to [8], satisfying the following requirement (b):
(b) Mw/Mn is 2.5 to 4.5.

[10] A terminal-stabilized polymer material corresponding to the propylene polymer material according to [8] or [9].

[11] The propylene polymer material according to any one of [8] to [10], further satisfying the following requirement (f):
(f) A color difference $\Delta E^*ab$ between the propylene polymer material and a standard white board in an $L^*a^*b^*$ color space is 0 to 10.

[12] The propylene polymer material according to any one of [8] to [11], further satisfying the following requirement (g):
(g) A value of chroma $C^*$ in an $L^*a^*b^*$ color space is 0 to 4.0.

[13] The propylene polymer material according to any one of [8] to [12], further satisfying the following requirement (h):
(h) A value of a coordinate $b^*$ in an $L^*a^*b^*$ color space is -1.0 to 3.0.

[14] A method for manufacturing the propylene polymer material according to any one of [1] to [7], the method including

copolymerizing an olefin other than propylene with propylene, in which
a content of the olefin unit other than propylene is 0.01 to 10 wt% with respect to 100 wt% of the copolymer.

[15] The method for manufacturing a propylene polymer material according to any one of [1] to [7], in which the number of polymerization steps is two or more, and propylene is polymerized in at least one of the steps.

[16] The propylene polymer material according to any one of [8] to [13], in which

the propylene polymer material is a copolymer obtained by copolymerizing an olefin other than propylene with propylene, and
a content of the olefin unit other than propylene is 0.01 to 10 wt% with respect to 100 wt% of the copolymer.

[17] The propylene polymer material according to any one of [8] to [13], in which the number of polymerization steps is two or more, and the propylene polymer material is obtained by polymerizing propylene in at least one of the steps.

EFFECT OF THE INVENTION

According to the present invention, a propylene polymer material manufactured under specific conditions using a Ziegler-Natta catalyst and an organozinc compound has a small molecular weight distribution. Therefore, the propylene polymer material can be suitably used in a molding step requiring a low viscosity and a high fluidity. Moreover, the propylene polymer material has a near-white color, and therefore can be used for various applications.

MODE FOR CARRYING OUT THE INVENTION

[Method for manufacturing propylene polymer material]

A manufacturing method of the present invention is as follows:

A method for manufacturing a propylene polymer material, the method including:

a continuous supply step of continuously supplying propylene, an olefin polymerization solid catalyst component, an organoaluminum compound, and an organozinc compound to a reactor; and
a continuous extraction step of continuously extracting a part of a propylene polymer material obtained in the reactor from the reactor.

<Olefin polymerization solid catalyst component>

The olefin polymerization solid catalyst component used in the manufacturing method of the present invention preferably contains a titanium atom and a magnesium atom.
Examples of a method for preparing the olefin polymerization solid catalyst component used in the manufacturing method of the present invention include the following methods (1) to (5):

(1) A method for bringing a magnesium halide and a titanium compound into contact with each other;
(2) A method for bringing a magnesium halide, an internal electron donor, and a titanium compound into contact with each other;
(3) A method for dissolving a magnesium halide and a titanium compound in an electron donating solvent to obtain a solution, and subsequently impregnating the solution in a carrier substance;
(4) A method for bringing a dialkoxymagnesium compound, a titanium halide, and an internal electron donor into contact with each other; and
(5) A method for bringing a solid component containing a magnesium atom, a titanium atom, and a hydrocarbon oxy group, a halide, and an internal electron donor and/or an organic acid halide into contact with each other.

In particular, a solid catalyst component obtained by the method (4) or (5) is preferable, and a solid catalyst component containing, as the internal electron donor, at least one compound selected from the group consisting of a monoester compound, a dicarboxylic acid ester compound, a diol diester compound, a diether compound, and a β-alkoxyester compound is more preferable. Examples of the monoester compound, the dicarboxylic acid ester compound, the diol diester compound, the diether compound, and the β-alkoxyester compound include compounds described in Patent Document (Japanese Patent Application No. 2018-531923) and combinations of two or more thereof.
Examples of the olefin polymerization solid catalyst component include olefin polymerization solid catalyst components described in JP-A-63-142008, JP-A-4-227604, JP-A-5-339319, JP-A-6-179720, JP-A-7-116252, JP-A-8-134124, JP-A-9-31119, JP-A-11-228628, JP-A-11-80234, JP-A-11-322833, JP-A-2018-531923, JP-A-2021-161216, and JP-A-2022-31142. In a case where this olefin polymerization solid catalyst component is used, an organoaluminum compound is preferably used in combination, and an external electron donating compound is used in combination as necessary.

<Organoaluminum compound>

Examples of the organoaluminum compound used in the manufacturing method of the present invention include: a trialkylaluminum such as trimethylaluminum, triethylaluminum, tributylaluminum, triisobutylaluminum, trihexylaluminum, trioctylaluminum, or tridecylaluminum; an alkylaluminum halide such as diethylaluminum monochloride, diisobutylaluminum monochloride, ethylaluminum sesquichloride, or ethylaluminum dichloride; an alkylaluminum hydride such as diethylaluminum hydride or diisobutylaluminum hydride; an aluminum alkoxide such as diethylaluminum ethoxide or diethylaluminum phenoxide; an alumoxane such as methylalumoxane, ethylalumoxane, isobutylalumoxane, or methylisobutylalumoxane; and combinations of two or more thereof. Among these compounds, a trialkylaluminum is preferable, and triethylaluminum is more preferable.

<External electron donating compound>

In the manufacturing method of the present invention, an external electron donating compound (external electron donor) as an optional component can also be continuously supplied to the reactor.

The external electron donating compound is a monoester compound, a dicarboxylic acid ester compound, a diol diester compound, a diether compound, or a β-alkoxy ester compound exemplified as the internal electron donor, or a silicon compound represented by the following formula [7], and is preferably a silicon compound represented by the following formula [7]:

$$R^7_r Si(OR^8)_{4-r} \qquad [7]$$

in which $R^7$ represents a hydrogen atom, a hydrocarbyl group having 1 to 20 carbon atoms, or a group containing a hetero atom, and when there are a plurality of $R^7$s, the $R^7$s are the same as or different from each other; $R^8$ represents a hydrocarbyl group having 1 to 20 carbon atoms, and when there are a plurality of $R^8$s, the $R^8$s are the same as or different from each other; and r represents an integer of 0 to 3. r is preferably 1 or 2, and more preferably 2.

Examples of the hydrocarbyl group having 1 to 20 carbon atoms in each of $R^7$ and $R^8$ include: a linear alkyl group having 1 to 20 carbon atoms, such as a methyl group, an ethyl group, a propyl group, a butyl group, or a pentyl group; a branched alkyl group having 3 to 20 carbon atoms, such as an isopropyl group, a sec-butyl group, a tert-butyl group, or a tert-amyl group; a cycloalkyl group having 3 to 20 carbon atoms, such as a cyclopentyl group or a cyclohexyl group; a cycloalkenyl group having 3 to 20 carbon atoms, such as a cyclopentenyl group; and an aryl group having 6 to 20 carbon atoms, such as a phenyl group or a tolyl group.

$R^7$ is preferably a methyl group, an ethyl group, a n-propyl group, an isopropyl group, an isobutyl group, a tert-butyl group, a tert-amyl group, a cyclopentyl group, a cyclohexyl group, a phenyl group, or a diethylamino group, and more preferably a methyl group, an ethyl group, a n-propyl group, a tert-butyl group, a cyclohexyl group, or a diethylamino group.

$R^8$ is preferably a methyl group or an ethyl group, and more preferably a methyl group.

Examples of the group containing a hetero atom in $R^7$ include: a group containing an oxygen atom, such as a furyl group, a pyranyl group, or a perhydrofuryl group; a group containing a nitrogen atom, such as a dimethylamino group, a methylethylamino group, a diethylamino group, an ethyl-n-propylamino group, a di-n-propylamino group, a pyrrolyl group, a pyridyl group, a pyrrolidinyl group, a piperidyl group, a perhydroindolyl group, a perhydroisoindolyl group, a perhydroquinolyl group, a perhydroisoquinolyl group, a perhydrocarbazolyl group, or a perhydroacridinyl group; a group containing a sulfur atoms, such as a thienyl group; and a group containing a phosphorus atom.

Among these groups, the hetero atom is preferably a group capable of being directly chemically bonded to a silicon atom of the silicon compound, and more preferably a dimethylamino group, a methylethylamino group, a diethylamino group, an ethyl-n-propylamino group, or a din-propylamino group.

Examples of the external electron donating compound include diisopropyldimethoxysilane, diisobutyldimethoxysilane, di-tert-butyldimethoxysilane, tert-butylmethyldimethoxysilane, tert-butylethyldimethoxysilane, tert-butyl-n-propyldimethoxysilane, tert-butyl-n-butyldimethoxysilane, tert-amylmethyldimethoxysilane, tert-amylethyldimethoxysilane, tert-amyl-n-propyldimethoxysilane, tert-amyl-n-butyldimethoxysilane, isobutylisopropyldimethoxysilane, tert-butylisopropyldimethoxysilane, dicyclobutyldimethoxysilane, cyclobutylisopropyldimethoxysilane, cyclobutylisobutyldimethoxysilane, cyclobutyl-tert-butyldimethoxysilane, dicyclopentyldimethoxysilane, cyclopentylisopropyldimethoxysilane, cyclopentylisobutyldimethoxysilane, cyclopentyl-tert-butyldimethoxysilane, dicyclohexyldimethoxysilane, cyclohexylmethyldimethoxysilane, cyclohexylethyldimethoxysilane, cyclohexylisopropyldimethoxysilane, cyclohexylisobutyldimethoxysilane, cyclohexyl-tert-butyldimethoxysilane, cyclohexylcyclopentyldimethoxysilane, cyclohexylphenyldimethoxysilane, diphenyldimethoxysilane, phenylmethyldimethoxysilane, phenylisopropyldimethoxysilane, phenylisobutyldimethoxysilane, phenyl-tert-butyldimethoxysilane, phenylcyclopentyldimethoxysilane, diisopropyldiethoxysilane, diisobutyldiethoxysilane, di-tert-butyldiethoxysilane, tert-butylmethyldiethoxysilane, tert-butylethyldiethoxysilane, tert-butyl-n-propyldiethoxysilane, tert-butyl-n-butyldiethoxysilane, tert-amylmethyldiethoxysilane, tert-amylethyldiethoxysilane, tert-amyl-n-propyldiethoxysilane, tert-amyl-n-butyldiethoxysilane, dicyclopentyldiethoxysilane, dicyclohexyldiethoxysilane, cyclohexylmethyldiethoxysilane, cyclohexylethyldiethoxysilane, diphenyldiethoxysilane, phenylmethyldiethoxysilane, 2-norbornane methyldimethoxysilane, bis(perhydroquinolino) dimethoxysilane, bis(perhydroisoquinolino) dimethoxysilane, (perhydroquinolino) (perhydroisoquinolino) dimethoxysilane, (perhydroquinolino) methyldimethoxysilane, (perhydroisoquinolino) methyldimethoxysilane, (perhydroquinolino) ethyldimethoxysilane, (perhydroisoquinolino) ethyldimethoxysilane, (perhydroquinolino) (n-propyl) dimethoxysilane, (Perhydroisoquinolino) (n-propyl) dimethoxysilane, ((perhydroquinolino) (tert-butyl) dimethoxysilane, (perhydroisoquinolino) (tert-butyl) dimethoxysilane, diethylaminotriethoxysilane, and combinations of two or more thereof.

<Organozinc compound>

Examples of the organozinc compound used in the manufacturing method of the present invention include: a dialkyl zinc such as dimethyl zinc, diethyl zinc, di-n-propyl zinc, di-n-butyl zinc, diisobutyl zinc, or di-n-hexyl zinc; a diaryl zinc such as diphenyl zinc or dinaphthyl zinc; bis (cyclopentadienyl) zinc; and a dialkenyl zinc such as diallyl zinc. Among these compounds, a dialkyl zinc is preferable, dimethyl zinc, diethyl zinc, di-n-propyl zinc, di-n-butyl zinc, diisobutyl zinc, or di-n-hexyl zinc is more preferable, dimethyl zinc or diethyl zinc is still more preferable, and diethyl zinc is particularly preferable.

<Monomer other than propylene>

In addition to propylene used in the manufacturing method of the present invention, another olefin can be used as a monomer. Examples of such an olefin include: a linear olefin such as ethylene, 1-butene, 1-pentene, 1-hexene, 1-heptene, 1-octene, or 1-decene; a branched olefin such as 3-methyl-1-butene, 3-methyl-1-pentene, or 4-methyl-1-pentene; an alicyclic olefin such as vinylcyclohexane; and combinations of two or more thereof.

It is well known to a person skilled in the art that a feed (a solvent, a monomer, an $\alpha$-olefin, hydrogen, a catalyst formulation, or the like) to the reactor must be essentially free of a catalyst deactivating poison, and non-limiting examples of the poison include a trace amount of an oxygenate such as water, a fatty acid, an alcohol, a ketone, or an aldehyde. Such a poison is removed from the feed to the reactor using standard purification procedures, and non-limiting examples thereof include a molecular sieve bed, an alumina bed, and an oxygen removal catalyst for purification of the feed.

As propylene and the monomer other than propylene, a fossil resource-derived monomer, a plant-derived monomer, a chemical recycle monomer, and the like can be used, and two or more of these may be used in combination.

The fossil resource-derived monomer is derived from carbon as an underground resource such as petroleum, coal, or natural gas, and hardly contains carbon 14 (14C) generally. Examples of a method for manufacturing the fossil resource-derived monomer include a known method such as a method for manufacturing an olefin by cracking of petroleum-derived naphtha, ethane, or the like, or dehydrogenation of ethane, propane, or the like.

The plant-derived monomer is derived from carbon circulating on the ground surface as plants/animals, and generally contains a certain ratio of carbon 14 (14C). Examples of a method for manufacturing the plant-derived monomer include known methods such as cracking of bionaphtha, vegetable oil, animal oil, and the like, dehydrogenation of biopropane and the like, a method for separating an alcohol from a fermentation product such as sugar extracted from a plant raw material such as sugar cane or corn, and subjecting the alcohol to a dehydration reaction (JP-A-2010-511634, JP-A-2011-506628, JP-A-2013-503647, and the like), and a method for subjecting ethylene obtained from plant-derived ethanol and n-butene to a metathesis reaction (WO 2007/055361 and the like).

A chemical recycle monomer is derived from carbon generated by decomposition or combustion of waste, and the content of carbon 14 (14C) in the chemical recycle monomer varies depending on the waste. Examples of a method for manufacturing the chemical recycle monomer include known methods such as a method for thermally decomposing waste plastic (JP-A-2017-512246 and the like), a method for cracking waste vegetable oil, waste animal oil, and the like (JP-A-2018-522087 and the like), and a method for subjecting waste such as garbage, biomass waste, food waste, waste oil, waste wood, paper waste, waste plastic, and the like to a gasification/alcohol conversion/dehydration reaction (JP-A-2019-167424, WO 2021/006245, and the like).

The propylene polymer material manufactured in the present invention is preferably a propylene homopolymer or a copolymer of propylene and another olefin, such as a propylene-ethylene copolymer, a propylene-1-butene copolymer, or a propylene-1-hexene copolymer. The polymer has a limiting viscosity of usually 0.5 to 15 dl/g, preferably 0.8 to 10 dl/g. The content of the other olefin unit in the copolymer is 0.01 to 10 wt% and preferably 0.1 to 8 wt% with respect to 100 wt% of the copolymer.

<Continuous supply step> and <Continuous extraction step>

The reactor used in the continuous supply step and the continuous extraction step of the manufacturing method of the present invention is a reactor in which internal homogeneity is maintained by stirring or the like in a liquid phase and gas flow or the like in a gas phase. The reactor may have a fractionation structure in a polymerization region therein, but the inside of each fractionation structure is preferably as homogeneous as possible. The reactor may be formed of a single body, but can be formed by connecting a plurality of reactors. In a case where a plurality of reactors are connected, the reactors are preferably connected in series. In a case where the reactor is formed of a plurality of reactors connected in series, at least propylene, the olefin polymerization solid catalyst component, and the organoaluminum compound may be supplied to a most upstream reactor, and may be continuously supplied as a polymer-containing material from a previous reactor to a reactor to which the organozinc compound is supplied. The organozinc compound is supplied to at least one reactor, but may be supplied to a plurality of reactors.

In the manufacturing method of the present invention, the organoaluminum compound and the organozinc compound are preferably continuously supplied to the reactor using separate lines in the continuous supply step. That is, when impurities (for example, AlHEt$_2$) contained in the organoaluminum compound (for example, AlEt$_3$) react with the

organozinc compound, the organozinc compound is reduced to zinc. Since zinc is gray, a propylene polymer material to be manufactured is colored. Such coloring can be avoided by supplying the organoaluminum compound and the organozinc compound from separate lines to the reactor.

In the manufacturing method of the present invention, a propylene polymer material is obtained through a step (polymerization step) of polymerizing propylene continuously supplied in the continuous supply step in the reactor, and then the propylene polymer material obtained in the reactor is continuously extracted from the reactor. In this continuous extraction step, a part of propylene, the olefin polymerization solid catalyst component, the organoaluminum compound, and the organozinc compound supplied in the continuous supply step is also extracted, and the concentrations of these components in the reactor are maintained in a certain range. In particular, this is considered to be effective for stably obtaining a propylene polymer material having a small molecular weight distribution for the purpose of maintaining the concentration of the organozinc compound consumed by the polymerization reaction within a certain range. In an environment where the concentration of the organozinc compound decreases due to participation of the organozinc compound in the polymerization reaction and consumption of the organozinc compound, the molecular weight of a propylene polymer to be generated gradually increases, and as a result, it is difficult to obtain a target propylene polymer having a small molecular weight distribution.

A supply rate of each component supplied in the continuous supply step and an extraction rate in the continuous extraction step can be changed within a range in which the concentration of each component in the reactor can be kept constant. The concentration of each component in the reactor is preferably maintained within $\pm 30\%$ of a target concentration. The concentration is more preferably maintained within $\pm 10\%$ of the target concentration.

At least a part of the continuous supply step and at least a part of the continuous extraction step are preferably performed simultaneously.

A supply rate of the organozinc compound in the continuous supply step to a generation rate of the propylene polymer material in the continuous extraction step is preferably 20 to 1000 (mmol-Zn/kg-PP), and more preferably 20 to 500 (mmol-Zn/kg-PP).

The supply rate of the organozinc compound to a supply rate of the organoaluminum compound is preferably 1.1 to 15 (mol-Zn/mol-Al), and more preferably 1.2 to 10 (mol-Zn/mol-Al) in the continuous supply step.

The supply rate of the organoaluminum compound in the continuous supply step to the generation rate of the propylene polymer material in the continuous extraction step is preferably 1 to 30 (mmol-Al/kg-PP), and more preferably 2 to 30 (mmol-Al/kg-PP).

In the continuous supply step, it is preferable to further continuously supply a hydrogen gas to the reactor.

The number of polymerization steps in the manufacturing method of the present invention is one or more. In a case where the number of steps is two or more, the type and amount of a monomer to be polymerized in each step and polymerization conditions in each step may vary depending on a step, but propylene is polymerized in at least one of the steps. An olefin polymer discharged from a final step is substantially a mixture of polymers manufactured in the steps.

Contact among the organozinc compound, the solid catalyst component, the organoaluminum compound, and the external electron donating compound is performed in the reactor or outside the reactor by diluting these compounds and components with a solvent or without using the solvent. The order of contact of these compounds and components is not particularly limited, but an exemplary method is a method for supplying the organoaluminum compound and the external electron donating compound to the reactor, and subsequently supplying a contact product of the organozinc compound and the solid catalyst component to the reactor. Supply to the reactor is preferably performed in the absence of moisture in an inert gas such as nitrogen or argon.

In a polymerization (hereinafter, referred to as "main polymerization") step in the manufacturing method of the present invention, the use amount of the organoaluminum compound is usually 1 to 1000 mol, and preferably 5 to 600 mol per mol of titanium atoms in the solid catalyst component. The use amount of the external electron donating compound in the main polymerization is usually 0.1 to 2000 mol, preferably 0.3 to 1000 mol, and more preferably 0.5 to 800 mol with respect to 1 mol of titanium atoms contained in the solid catalyst component, and is usually 0.001 to 5 mol, preferably 0.005 to 3 mol, and more preferably 0.01 to 1 mol with respect to the organoaluminum compound.

A polymerization temperature in the main polymerization is usually -30 to 300°C, preferably 20 to 180°C, and more preferably 40 to 100°C. A polymerization pressure is usually normal pressure to 10 MPa, and preferably 200 kPa to 5 MPa. A polymerization time is usually 0.2 to 10 hours, and preferably 0.5 to 6 hours. In a case where a plurality of reactors are used, an average residence time in each of the reactors is 0.05 to 5 hours, and preferably 0.1 to 3 hours. Examples of the polymerization reactor include a loop reactor, a continuous stirring tank reactor, a fluidized bed type reactor, and a spouted bed type reactor.

The main polymerization is performed by a slurry polymerization method or a solution polymerization method using a non-activated hydrocarbon solvent such as propane, butane, isobutane, pentane, hexane, heptane, or octane, a bulk polymerization method using a liquid olefin as a medium at a polymerization temperature, a gas phase polymerization method, or a method combining two or more of these methods. The main polymerization preferably includes at least a bulk polymerization method among these methods. In addition, the main polymerization is performed in a batch type, at least a continuous type, or a combination thereof. In the main polymerization, a plurality of polymerization reactors in which polymerization conditions are different from each other and which are arranged in series may be used. The polymerization conditions may be changed continuously in one reactor. In order to adjust the molecular weight of a propylene polymer material obtained by the main polymerization, a chain transfer agent such as hydrogen may be used.

In the main polymerization, in order to improve particle properties of an obtained propylene polymer material powder, a prepolymerized solid catalyst component described below may be used instead of the solid catalyst component.

In a case where the prepolymerized solid catalyst component is used in the main polymerization, the organoaluminum compound in the main polymerization is not essential.

In the manufacture of the propylene polymer material, prepolymerization may be performed by a known method before the main polymerization is performed. Examples of the known prepolymerization method include a method in which a small amount of olefin (the same as or different from the olefin in the main polymerization) is supplied in the presence of a solid catalyst component and an organoaluminum compound, and polymerization is performed in a slurry state using a solvent. Examples of the solvent used for obtaining a slurry include a non-activated hydrocarbon solvent such as propane, butane, isobutane, pentane, isopentane, hexane, heptane, octane, 2,2,4-trimethylpentane, cyclohexane, benzene, xylene, or toluene. A part or whole of the solvent can be replaced with a liquid olefin. In addition, prepolymerization can be performed in the presence of a viscous substance such as an olefin wax to obtain a prepolymerization catalyst that is stable during storage and handling. In addition, an embodiment of the prepolymerization is not particularly limited, and the prepolymerization can be performed by any of a batch method, a semi-batch method, and a continuous method.

The use amount of the organoaluminum compound in the prepolymerization is usually 0.5 to 700 mol, preferably 0.8 to 500 mol, and more preferably 1 to 200 mol, per mol of titanium atoms in the solid catalyst component.

The amount of the olefin to be prepolymerized is usually 0.01 to 1000 g, preferably 0.05 to 500 g, and more preferably 0.1 to 200 g per g of the solid catalyst component.

A slurry concentration in the prepolymerization is preferably 1 to 500 g-solid catalyst component/liter-solvent, and more preferably 3 to 300 g-solid catalyst component/liter-solvent. A temperature of the prepolymerization is preferably -20 to 100°C, and more preferably 0 to 80°C.

A polymerization time of the prepolymerization is usually 30 seconds to 15 hours. A partial pressure of the olefin in a gas phase in the prepolymerization is preferably 1 kPa to 2 MPa and more preferably 10 kPa to 1 MPa, but this is not applied to an olefin that is liquid at a pressure or a temperature of the prepolymerization.

Examples of a method for supplying the solid catalyst component, the organoaluminum compound, and the olefin to a prepolymerization tank in the prepolymerization include (1) a method in which the solid catalyst component and the organoaluminum compound are brought into contact with each other and then the contact product and the olefin are supplied, and (2) a method in which the solid catalyst and the olefin are brought into contact with each other and then the contact material and the organoaluminum compound are supplied. Examples of a method for supplying the olefin include (1) a method for sequentially supplying the olefin such that the inside of the prepolymerization tank maintains a predetermined pressure, and (2) a method for first supplying the whole of a predetermined amount of the olefin. A chain transfer agent such as hydrogen may be added in order to adjust the molecular weight of a prepolymerized olefin polymer.

The prepolymerization may use an organozinc compound or an external electron donating compound in addition to the solid catalyst component and the organoaluminum compound. The use amount of the external electron donating compound is usually 0.01 to 400 mol, preferably 0.02 to 200 mol, and more preferably 0.03 to 100 mol with respect to 1 mol of titanium atoms contained in the solid catalyst component, and is usually 0.003 to 5 mol, preferably 0.005 to 3 mol, and more preferably 0.01 to 2 mol with respect to the organoaluminum compound.

Examples of a method for supplying the external electron donating compound to the prepolymerization tank in the prepolymerization include (1) a method for supplying the external electron donating compound separately from the organoaluminum compound, and (2) a method for supplying a contact product between the external electron donating compound and the organoaluminum compound.

In the manufacture of the propylene polymer material, preactivation may be performed by a known method. The preactivation can be performed instead of or prior to the prepolymerization. Examples of a known preactivation method include a method in which a solid catalyst component and an organic aluminum are brought into contact with each other in the absence of an olefin in a solvent, and examples of the solvent to be used include a non-activated hydrocarbon solvent such as propane, butane, isobutane, pentane, isopentane, hexane, heptane, octane, 2,2,4-trimethylpentane, cyclohexane, benzene, xylene, or toluene. In the preactivation, an organozinc compound or an external electron donating compound may be used in addition to the solid catalyst component and the organoaluminum compound. The preactivated catalyst particularly exhibits a significantly lower attachment forming tendency, and makes it possible to set the degree of preactivation for a relatively long storage time in a stable manner and to set reproducible manufacturing conditions over a long period of time. The obtained preactivated catalyst can be weighed and put into a continuously operated reactor equipped with a stirrer. In addition, preactivation can also be performed in the presence of a viscous substance such as an olefin wax to provide a preactivated catalyst that is stable during storage and handling. In addition, an embodiment of the preactivation is not particularly limited, and the prepolymerization can be performed by any of a batch method, a semi-batch method, and a continuous method.

The propylene polymer material obtained in the polymerization step of the present invention has an organic metal-containing terminal group containing an organozinc at least at a part of a polymer chain terminal thereof. In a case of a linear polymer chain, the linear polymer chain usually has an organic metal-containing terminal group only at one terminal thereof. The organic metal-containing terminal group is generally highly reactive, and can be stabilized, for example, in any non-polymerizable reaction step with an active proton compound such as water, alcohols, or carboxylic acids, or a reactive gas compound such as oxygen or carbon dioxide. Examples of the terminal group after stabilization include a hydroxy group and a carboxyl group. The propylene polymer material of the present invention may be a polymer material having an organic metal-containing terminal group, or may be a terminal-stabilized polymer material that has been subjected to any non-polymerizable reaction step. In addition, the propylene polymer material may be a polymer material containing the polymer manufactured by combining the polymerization step of the present invention and another polymerization step.

[Propylene polymer material]

The propylene polymer material of the present invention is as follows:
A propylene polymer material satisfying the following requirements (a) and (b):

(a) A ratio of zinc atom/aluminum atom in the propylene polymer material is 1.1 to 15 (mol-Zn/mol-Al).
(b) Mw/Mn is 2.5 to 4.5.

The zinc atom in the propylene polymer material is present in a form in which the zinc atom is incorporated into the propylene polymer or a form of a composition of the zinc atom with the propylene polymer and a catalyst residue, and the aluminum atom in the propylene polymer material is present in a form in which the aluminum atom is incorporated into the propylene polymer or a form of a composition of the aluminum atom with the propylene polymer and a catalyst residue.

The (a) ratio of zinc atom/aluminum atom in the propylene polymer material is preferably 1.2 to 10 (mol-Zn/mol-Al). The (b) Mw/Mn is preferably 2.6 to 4.4.

The propylene polymer material of the present invention (c) preferably contains zinc atoms in the propylene polymer at a concentration of 20 to 1000 (mmol-Zn/kg-PP), more preferably at a concentration of 20 to 500 (mmol-Zn/kg-PP).

The propylene polymer material of the present invention (d) preferably contains aluminum atoms in the propylene polymer at a concentration of 1 to 30 (mmol-Al/kg-PP), more preferably at a concentration of 2 to 30 (mmol-Al/kg-PP).

Examples of the active proton compound that can be used in any non-polymerizable reaction step include water (examples of which include moisture in the atmosphere, a water-containing nitrogen gas, and boiled water.), an alcohol (such as ethanol, boiled ethanol, methanol, boiled methanol, isopropyl alcohol, or boiled isopropyl alcohol), a hydrocarbon having an active proton (such as toluene), a carboxylic acid (such as acetic acid), and an inorganic acid (such as concentrated hydrochloric acid or carbonic acid). The active proton compound is preferably water, methyl alcohol, ethyl alcohol, isopropyl alcohol, or n-butyl alcohol,

more preferably water, methyl alcohol, or ethyl alcohol, and
still more preferably water.

Examples of the reactive gas compound that can be used in any non-polymerizable reaction step include an oxygen gas, a carbon dioxide gas, a carbon monoxide gas, an ozone gas, a fluorine gas, a chlorine gas, bromine gas, an iodine gas, an ethylene oxide gas, a propylene oxide gas, a methyl acrylate gas, a methyl methacrylate gas, an acrylonitrile gas, a hydrogen cyanide gas, a formaldehyde gas, a methyl isocyanate gas, a carbon disulfide gas, and mixtures thereof.

The reactive gas compound is preferably an oxygen gas, a carbon dioxide gas, or a mixture of an oxygen gas and a carbon dioxide gas, and
more preferably an oxygen gas.

The reactive gas compound may be a mixed gas containing an inert gas such as a nitrogen gas or an argon gas.

The inert gas is preferably a nitrogen gas or an argon gas, and more preferably a nitrogen gas.

A volume fraction of the reactive gas compound in the mixed gas is preferably 0.001 to 99.9%. The volume fraction is more preferably 0.001 to 80.0%, still more preferably 0.001 to 30%, particularly preferably 0.01 to 15 vol%, and most preferably 1 to 3 vol%.

In a case where the reactive gas compound is an oxygen gas, a mixed gas containing an oxygen gas having a concentration lower than that of air is preferable.

In a case where the reactive gas compound is a carbon dioxide gas, a mixed gas containing a carbon dioxide gas having a concentration higher than that in the atmosphere is preferable.

In a case where the polymer material having an organic metal-containing terminal group is treated with the reactive gas compound in any non-polymerizable reaction step, the treatment is preferably performed under a condition of a total pressure of 3 MPa or less. In order to perform the reaction under high pressure conditions, an expensive reaction vessel that can withstand high pressure is required, which is not preferable from a viewpoint of economy. The reaction is more preferably performed at a total pressure of 0.1 MPa or more. The reaction is still more preferably performed at a total pressure of 0.1 to 1 MPa, and most preferably performed at a total pressure of 0.1 to 0.2 MPa.

A time for treatment with the reactive gas compound is preferably 1 to 120 minutes. The time is more preferably 1 to 90 minutes. The time is still more preferably 1 to 60 minutes.

In a case where the polymer material having an organic metal-containing terminal group is treated with the reactive gas compound in any non-polymerizable reaction step, the polymer material is preferably further treated with an active proton compound.

A time for treatment with the active proton compound is preferably 1 to 120 minutes. The time is more preferably 1 to 90 minutes. The time is still more preferably 1 to 60 minutes.

In any non-polymerizable reaction step of the polymer material having an organic metal-containing terminal group, the treatment with the reactive gas compound and the treatment with the active proton compound may be performed simultaneously. That is, the polymer material having an organic metal-containing terminal group may be treated with a mixture of the reactive gas compound and the active proton compound. In this case, the number of treatments can be reduced, which is preferable from a viewpoint of efficiency and economy.

The terminal-stabilized polymer material that has been subjected to any non-polymerizable reaction step is preferably further treated in a step of removing a volatile compound.

Specific examples of the step of removing a volatile compound include a method for reducing pressure while heating, a method for circulating a nitrogen gas while heating, and a method for continuously extracting and removing a volatile compound with heated water or heated alcohol, and then reducing pressure or circulating a nitrogen gas.

Examples of the volatile compound include (a) a diluting solvent such as propylene, a hydrogen gas, hexane, or heptane, (b) ethanol or a low molecular (oligomeric) alcohol (such as 2-methyl-1-butanol or 2-methyl-1-pentanol) generated from an unreacted diethyl zinc compound or triethyl aluminum and an oxygen gas, and (c) an active proton compound such as water or ethanol, added in the non-polymerizable reaction step.

Remaining of (b) in the propylene polymer material may hinder functional expression of the propylene polymer material, or may give the propylene polymer material an odor.

A time of the step of removing the volatile compound is preferably 1 to 120 minutes. The time is more preferably 1 to 90 minutes. The time is still more preferably 1 to 60 minutes.

(A) is 0.010 or more and (B)/(A) is 0.40 or more in the following (A) and (B):

(A) A ratio of the number of organic metal-containing terminal groups to the number of starting terminals of the propylene polymer material
(B) A ratio of the number of organic metal-containing terminal groups to the number of starting terminals of a specific high molecular weight fraction of the propylene polymer material
(A) is preferably 0.020 to 0.90, more preferably 0.030 to 0.80, still more preferably. 0.040 to 0.50, and most preferably 0.050 to 0.25. (B)/(A) is preferably 0.50 to 1.0, more preferably 0.60 to 1.0, and still more preferably 0.70 to 1.0.

In the propylene polymer material of the present invention, (f) a color difference $\Delta E^*ab$ between the propylene polymer material and a standard white board in an $L^*a^*b^*$ color space is preferably 0 to 10, and more preferably 0 to 6. The color difference $\Delta E^*ab$ is still more preferably 1 to 6, and most preferably 1 to 3.

In the propylene polymer material of the present invention, (g) a value of chroma $C^*$ in the $L^*a^*b^*$ color space is preferably 0 to 4.0, and more preferably 0 to 3.0. The value of chroma $C^*$ is still more preferably 0 to 2.0, and most preferably 0.5 to 1.5.

In the propylene polymer material of the present invention, (h) a value of coordinate $b^*$ in the $L^*a^*b^*$ color space is preferably -1.0 to 3.0, and more preferably -1.0 to 2.0. The value of coordinate $b^*$ is still more preferably 0 to 2.0, and most preferably 0.5 to 1.5.

Both an absolute value of the color difference $\Delta E^*ab$ between the propylene polymer material and the standard white board and an absolute value of the chroma $C^*$ are preferably small because the small absolute values indicate a near-white state. That is, as the absolute values of the color difference $\Delta E^*ab$ and the chroma $C^*$ are smaller, it is more difficult to visually recognize a color difference from the standard white board, which is preferable. As the absolute values of the color difference $\Delta E^*ab$ and the chroma $C^*$ are larger, it is easier to visually recognize a color difference from the standard white board, which is not preferable.

The propylene polymer material after stabilization in any non-polymerizable reaction step including treatment with a reactive gas compound preferably contains a polymer chain having a hydroxy group at a terminal thereof.

Examples of such a propylene polymer material include a propylene homopolymer and a propylene/ethylene copolymer (random copolymer).

A ratio (A) of the number of hydroxy group terminals to the number of starting terminals of the propylene polymer material in the propylene polymer material having a hydroxy group is preferably 0.01 to 0.90. The ratio (A) is more preferably 0.02 to 0.70, still more preferably 0.03 to 0.50, particularly preferably. 0.04 to 0.30, and most preferably 0.05 to 0.25.

A melting point (Tm) of the propylene polymer material of the present invention is preferably 150 to 170°C, more preferably 158 to 170°C, still more preferably 160 to 168°C, and most preferably 161 to 168°C.

On a higher temperature side than a main peak of the melting point, a sub-peak having a smaller intensity than the main peak is preferably present.

The sub-peak is preferably 155 to 175°C, more preferably 163 to 170°C, still more preferably 164 to 170°C, and most preferably 165 to 170°C.

A heat quantity of fusion ($\Delta$H) of the propylene polymer material of the present invention is preferably 80 to 150kJ/mol, and more preferably 100 to 135 kJ/mol.

A number average molecular weight (Mn) of the propylene polymer material of the present invention is preferably 10,000 to 500,000, more preferably 20,000 to 200,000, still more preferably 20,000 to 100,000, particularly preferably 20,000 to 80,000, and most preferably 20,000 to 40,000.

The propylene polymer material of the present invention can be mixed with a known additive in a powder state or a hot-melt state. Examples of the additive include a neutralizing agent, an antioxidant, an ultraviolet absorber, a light stabilizer, an antiblocking agent, a processing aid, an organic peroxide, a colorant (such as an inorganic pigment, an organic pigment, or a pigment dispersant), a foaming agent, a foaming nucleating agent, a plasticizer, a flame retardant, a crosslinking agent, a crosslinking aid, a brightener, an antibacterial agent, a light diffusing agent, an inorganic filler, and a scratch resistance inhibitor. Only one type of these additives may be mixed, or two or more types thereof may be mixed.

In addition, the propylene polymer material of the present invention can be mixed with the propylene polymer material of the present invention that is different in a powder state or a hot-melt state, or another known polymer material.

The method for manufacturing the propylene polymer material of the present invention is not particularly limited, but the propylene polymer material can be manufactured by the manufacturing method described in the above [Method for manufacturing propylene polymer material].

EXAMPLES

Hereinafter, the present invention will be described using Examples and Comparative Examples. The present invention is not limited to Examples described below.

Physical properties of propylene polymer materials manufactured in Examples and Comparative Examples were measured by the following methods.

(1) Elemental analysis in propylene polymer material

The contents of zinc atoms and aluminum atoms in a propylene polymer material were measured by inductively coupled plasma atomic emission spectrometry (ICP-AES method) using, as a measurement sample liquid, a product obtained by subjecting the propylene polymer material to acidolysis and subsequently to alkali fusion.

(2) Gel permeation chromatography (GPC)

A molecular weight of a propylene polymer material was measured by the following method using GPC. Ortho-dichlorobenzene (0.5 w/V dibutylhydroxytoluene was added as an antioxidant) was used as a solvent, and a sample concentration of the propylene polymer material was set to 0.5 mg/mL. As an apparatus, HLC-8121GPC/HT manufactured by Tosoh Corporation or HLC-8321GPC/HT manufactured by Tosoh Corporation was used. As a measurement column, three GPC columns (TSKgel GMHHR-H(S)HT (7.8 mm, I.D. × 300 mm)) manufactured by Tosoh Corporation were connected to each other and used. Ortho-dichlorobenzene (0.1 w/V dibutylhydroxytoluene was added as an antioxidant) was used as a mobile phase, a flow rate was set to 1 mL/min, a column oven temperature was set to 140°C, an autosampler temperature was set to 140°C, and a system oven temperature was set to 40°C. A differential refractive index detector (RID) was used as a detector, an RID cell temperature was set to 140°C, and an injection amount of the sample solution was set to 300 μL. The obtained measured value was multiplied by a Q factor value of 26.4 to obtain a molecular weight in terms of polypropylene.

(3) Color difference $\Delta$E*ab between propylene polymer material and standard white board and chroma C*

Coordinates L*, a*, and b* of a propylene polymer material in an L*a*b* color space were measured by a reflection method using an SM-T45 color meter manufactured by Suga Test Instruments Co., Ltd. in accordance with a JIS Z 8722 condition a, by introducing a powdery propylene polymer material into a cylindrical glass cell having a diameter of 60 mm and a height of 30 mm, and placing the cell on a sample stage having an opening diameter of $\varphi$50 mm. A color difference $\Delta E^*_{ab}$ between the propylene polymer material a and standard white board and chroma $C^*$ were calculated by the following formulas.

$$\Delta L^* = L^*_2 - L^*_1$$

$$\Delta a^* = a^*_2 - a^*_1$$

$$\Delta b^* = b^*_2 - b^*_1$$

(in which

L$^*_1$, a$^*$i, and b$^*_1$ represent coordinates of the propylene polymer material in the L*a*b* color space.
L$^*_2$, a$^*_2$, and b$^*_2$ represent coordinates of the standard white board in the L*a*b* color space.)

$$\Delta E^*ab = [(\Delta L^*)^2 + (\Delta a^*)^2 + (\Delta b^*)^2]^{1/2}$$

$$C^* = [(a^*_1)^2 + (b^*_1)^2]^{1/2}$$

(4) Limiting viscosity ($[\eta]$T, unit: dL/g)

As a limiting viscosity of a propylene polymer material, a reduced viscosity of the propylene polymer material was measured under conditions of a solvent: tetralin, a temperature: 135°C, a concentration: 0.1 g/dL, 0.2 g/dL, or 0.5 g/dL using an Ubbelohde viscometer. Next, the limiting viscosity of the propylene polymer material was obtained by an extrapolation method in which the reduced viscosity of the propylene polymer material is plotted with respect to a concentration and the concentration is extrapolated to zero according to the calculation method described on page 491 of "Polymer solution, Polymer Experiment 11" (published by KYORITSU SHUPPAN CO., LTD., 1982).

(5) Limiting viscosity ($[\eta]$A, unit: dL/g) of propylene polymer component (A) and limiting viscosity ($[\eta]$B (unit: dL/g)) of propylene polymer component (B)

In a case where a propylene polymer material was manufactured by a multistage polymerization method and contained a propylene polymer component (A) manufactured in a first-stage polymerization tank and a propylene polymer component (B) manufactured in a second-stage polymerization tank, $[\eta]$A was obtained by extracting the propylene polymer component (A) from the polymerization tank and measuring $[\eta]$A by the method (4) described above.
$[\eta]$B was calculated by the following formula using $[\eta]$T, $[\eta]$A, and a polymerization ratio ($\chi$) of the propylene polymer component (B). Note that the polymerization ratio ($\chi$) was obtained by the method described in the following (5') .

$$[\eta]B = [\eta]T/\chi + (1 - 1/\chi)[\eta]A$$

(5') Polymerization ratio of propylene polymer component (B) ($\chi$, unit: wt%)

The polymerization ratio ($\chi$) of the propylene polymer component (B) to the entire propylene polymer material was calculated by the following method.

$$\chi = 1 - PP(A)/PP(Total)$$

$$PP(A) + PP(B) = PP(Total)$$

(in which

PP (A) represents a generation amount of the propylene polymer component (A) per unit time (kg/hr).
PP (B) represents a generation amount of the propylene polymer component (B) per unit time (kg/hr).

PP (Total) represents a total generation amount (kg/hr) of the generation amount of the propylene polymer component (A) per unit time and the generation amount of the propylene polymer component (B) per unit time (a generation amount of the propylene polymer material).)

(6) Melt flow rate (MFR (unit: g/10 min))

A melt flow rate of a propylene polymer material was measured in accordance with JIS K7210 at a temperature of 230°C and a load of 2.16 kgf.

(7) Cold xylene soluble component amount (CXS (unit:wt%))

About 0.5 g of a propylene polymer material sample was weighed, and a weighing value X0 (g) was obtained. The propylene polymer material sample was dissolved in 100 mL of boiling xylene, then cooled, cooled in an ice-water water tank for 20 minutes, and recrystallized in a thermostatic bath at 20°C for one hour while being stirred. The amount (X (g)) of the propylene polymer material dissolved in the obtained filtrate was quantified by the following liquid chromatography. Then, CXS was calculated by the following formula.

$$\mathtt{CXS\ value\ (wt\%)\ =\ X/X0\ \times\ 100}$$

(8) Liquid chromatography (LC method)

Liquid chromatograph was performed under the following conditions using an HPLC apparatus (manufactured by Shimadzu Corporation). SHODEX GPC KF-801 (upper limit exclusion limit molecular weight of 1500) was used as a column, and tetrahydrofuran was used as an eluent. A column oven temperature was 40°C, a sample injection amount was 130 $\mu$L, a flow rate was 1 ml/min, and a differential refractometer (RI) was used as a detector. Measurement was performed using the following equipment.

(i) Liquid feeding pump: LC-20AD (manufactured by Shimadzu Corporation)
(ii) Degasser: DGU-20A3 (manufactured by Shimadzu Corporation)
(iii) Auto sampler: SIL-20A HT (manufactured by Shimadzu Corporation)
(iv) Column oven: CTO-20A (manufactured by Shimadzu Corporation)
(v) Differential refractive index detector (RID): RID-10A (manufactured by Shimadzu Corporation)
(vi) System controller: CBM-20A (manufactured by Shimadzu Corporation)

(9) Melting point (Tm, unit: °C)

A melting point of a propylene polymer material was measured using a differential scanning calorimeter (DSC). A sample (about 5 mg) of a propylene polymer material was filled in an aluminum pan, and the aluminum pan was placed in a differential scanning calorimeter DSC8500 type apparatus (manufactured by PerkinElmer, Inc.). The temperature was raised to 230°C, held at 230°C for five minutes, lowered to 0°C at 5°C/min, held at 0°C for five minutes, and then raised to 200°C at 5°C/min to measure a melting curve. The temperature was corrected by defining a melting point of indium as 156.6°C. The temperature of a melting peak top in the melting curve was defined as the melting point of the propylene polymer material.

(10) Static bulk density (SBD, unit: g/mL)

A static bulk density of a propylene polymer material was measured in accordance with the method defined in JIS K 6722.

(11) Ratio of the number of organic metal-containing terminal groups to the number of starting terminals of propylene polymer material

A ratio of the number of organic metal-containing terminal groups to the number of starting terminals of a propylene polymer material was obtained by bringing the organic metal-containing terminal groups of the propylene polymer material into contact with oxygen as a reactive gas compound and water as an active proton compound to induce the organic metal-containing terminal groups to hydroxy group terminals, measuring the terminal-stabilized polymer material using 13C-NMR under the following conditions, and calculating the ratio from an integral value of the obtained specific peak.

(13C-NMR measurement conditions)

Model: Bruker AVANCE 600
Probe: 10 mm cryoprobe
Measurement solvent: mixed liquid of 1,2-dichlorobenzene/1,2-dichlorobenzene-d4 = 75/25 (volume ratio)
Measurement temperature: 135°C
Pulse repeating time: four seconds
Pulse width: 45°
Number of integrations: 5120
Magnetic field strength: 600 MHz (1H)
Standard of measurement: tetramethylsilane

(Peak analysis) When [an integrated value of all peaks present at 50 to 10 ppm] was taken as 1,000,000, integrated values of the following peaks (a1 to a5) were obtained. By substituting these values into the following formulas, a starting terminal integral value and an organic metal-containing terminal (hydroxy group terminal) integral value of the propylene polymer material were obtained.

a1 (68.39 ppm): $\underline{C}H2OH$
a2 (45.25 ppm): CH3CH2CH(CH3)$\underline{C}H2$
a3 (41.74 ppm): CH2CH(CH3)$\underline{C}H2OH$
a4 (39.48 ppm): $\underline{C}H2CH2CH3$
a5 (29.36 ppm): $\underline{C}H2CH3$
Starting terminal integral value =a4+ (a2 + a5)/2

Organic metal-containing terminal (hydroxy group terminal) integrated value = (a1 + a3)/2

From a ratio of the organic metal-containing terminal (hydroxyl group terminal) integral value to the starting terminal integral value, a ratio of the number of organic metal-containing terminal groups to the number of starting terminals of the propylene polymer material was obtained.

(12) Extraction of specific high molecular weight fraction

PREP mc2 manufactured by Polymer Char was used to extract a specific high molecular weight fraction of a propylene polymer material. By using ortho-dichlorobenzene as a good solvent and using butoxyethanol as a poor solvent, 200 mL of a mixed solvent having the following ratio was added to 1.0 g of the propylene polymer material, a temperature thereof was raised to 135°C, then the temperature was lowered to 125°C, and extraction was performed.
Ratio of poor solvent (%) Amount of good solvent (ml) Amount of poor solvent (ml)

|  | Ratio of poor solvent (%) | Amount of good solvent (ml) | Amount of poor solvent (ml) |
| --- | --- | --- | --- |
| 1Fr | 90 | 20 | 180 |
| 2Fr | 80 | 40 | 160 |
| 3Fr | 70 | 60 | 140 |

200 mL of the obtained solution was put into 2000 mL of methanol, and the mixture was stirred for four hours to cause precipitation. The precipitate was collected by suction filtration and dried under vacuum at room temperature for four hours, and each fractionated component was collected. Fractionation was sequentially performed from 1Fr, and 3Fr was defined as a specific high molecular weight fraction.

<Example 1: Manufacture of propylene polymer material 1>

[Preparation of solid catalyst component]

According to a method described in Example 1 of JP-A-2009-173870, an olefin polymerization solid catalyst component was obtained.

[Prepolymerization]

Into an SUS autoclave having an internal volume of 3 L and equipped with a stirrer, 1.53 L of n-hexane, 30.7 mmol of triethylaluminum (hexane solution), and 4.0 mmol of cyclohexylethyldimethoxysilane (hexane solution), which had been sufficiently dehydrated and degassed, were put. Into the autoclave, 13.2 g of the olefin polymerization solid catalyst component prepared above was added, and 46.2 g of propylene was continuously supplied thereto over about 40 minutes while the temperature in the autoclave was maintained at about 3 to 10°C to perform prepolymerization. Thereafter, a prepolymerization slurry was transferred to a SUS autoclave having an internal volume of 200 L and equipped with a stirrer, 132 L of sufficiently purified liquid butane was added thereto to prepare a slurry of a prepolymerized catalyst component, and the slurry was stored at a temperature of 10°C or lower.

[Propylene polymerization (liquid phase polymerization reaction)]

Homopolymerization of propylene was performed using a loop reactor having a total internal volume of 30 L. Propylene, hydrogen, triethylaluminum, cyclohexylethyldimethoxysilane, diethylzinc, and the slurry of the prepolymerized catalyst component prepared above were continuously supplied to a reactor, and polymerization was performed in a full liquid state without presence of a gas phase. Reaction conditions were as follows: polymerization temperature: 70°C, pressure: 4.4 MPaG, supply amount of propylene: 78 kg/hr, supply amount of hydrogen: 49.4 NL/hr, supply amount of triethylaluminum: 36.8 mmol/hr (hexane solution), supply amount of cyclohexylethyldimethoxysilane: 5.5 mmol/hr (hexane solution), diethyl zinc: 200 mmol/hr (hexane solution), and supply amount of slurry of prepolymerized catalyst component (in terms of solid catalyst component): 0.57 g/hr. Note that a single introducing line was used for supplying diethyl zinc to a reactor. The amount of the propylene polymer material 1 continuously discharged from the reactor was 3.6 kg/hr and was continuously transferred to a post-treatment step. While the obtained propylene polymer material 1 was continuously received, nitrogen at 60°C was circulated for two hours at a flow rate of 20 Nm$^3$/h, and nitrogen at 60°C was further circulated for one hour at a flow rate of 20 Nm$^3$/h to perform drying. Thereafter, contact with undried air containing oxygen and water was performed. Results thereof are presented in Tables 1 to 11.

<Example 2: Manufacture of propylene polymer material 2>

[Preparation of solid catalyst component] and [Prepolymerization]

Preparation of a solid catalyst component] and prepolymerization were performed by a method similar to Example 1.

[Propylene polymerization (liquid phase polymerization reaction)]

Homopolymerization of propylene was performed using a loop reactor having a total internal volume of 30 L. Propylene, hydrogen, triethylaluminum, cyclohexylethyldimethoxysilane, diethylzinc, and the slurry of the prepolymerized catalyst component prepared above were continuously supplied to a reactor, and polymerization was performed in a full liquid state without presence of a gas phase. Reaction conditions were as follows: polymerization temperature: 70°C, pressure: 4.4 MPaG, supply amount of propylene: 78 kg/hr, supply amount of hydrogen: 100.9 NL/hr, supply amount of triethylaluminum: 36.8 mmol/hr (hexane solution), supply amount of cyclohexylethyldimethoxysilane: 5.5 mmol/hr (hexane solution), diethyl zinc: 100 mmol/hr (hexane solution), and supply amount of slurry of prepolymerized catalyst component (in terms of solid catalyst component): 0.58 g/hr. Note that a single introducing line was used for supplying diethyl zinc to a reactor. The amount of a propylene polymer material 2 continuously discharged from the reactor was 4.2 kg/hr and was continuously transferred to a post-treatment step. While the obtained propylene polymer material 2 was continuously received, nitrogen at 60°C was circulated for two hours at a flow rate of 20 Nm$^3$/h, and nitrogen at 60°C was further circulated for one hour at a flow rate of 20 Nm$^3$/h to perform drying. Thereafter, contact with undried air containing oxygen and water was performed. Results thereof are presented in Tables 1 to 11.

<Example 3: Manufacture of propylene polymer material 3>

[Preparation of solid catalyst component] and [Prepolymerization]

Preparation of a solid catalyst component] and prepolymerization were performed by a method similar to Example 1.

[Propylene polymerization (liquid phase polymerization reaction)]

Homopolymerization of propylene was performed using a loop reactor having a total internal volume of 30 L. Propylene, hydrogen, triethylaluminum, cyclohexylethyldimethoxysilane, diethylzinc, and the slurry of the prepolymerized catalyst component prepared above were continuously supplied to a reactor, and polymerization was performed in a full liquid state without presence of a gas phase. Reaction conditions were as follows: polymerization temperature: 70°C, pressure: 4.4 MPaG, supply amount of propylene: 39 kg/hr, supply amount of hydrogen: 24.2 NL/hr, supply amount of triethylaluminum: 36.8 mmol/hr (hexane solution), supply amount of cyclohexylethyldimethoxysilane: 5.5 mmol/hr (hexane solution), diethyl zinc: 200 mmol/hr (hexane solution), and supply amount of slurry of prepolymerized catalyst component (in terms of solid catalyst component): 0.60 g/hr. Note that a single introducing line was used for supplying diethyl zinc to a reactor. The amount of a propylene polymer material 3 continuously discharged from the reactor was 7.4 kg/hr and was continuously transferred to a post-treatment step. While the obtained propylene polymer material 3 was continuously received, nitrogen at 60°C was circulated for two hours at a flow rate of 20 Nm$^3$/h, and nitrogen at 60°C was further circulated for one hour at a flow rate of 20 Nm$^3$/h to perform drying. Thereafter, contact with undried air containing oxygen and water was performed. Results thereof are presented in Tables 1 to 11.

<Example 4: Manufacture of propylene polymer material 4>

[Preparation of solid catalyst component] and [Prepolymerization]

Preparation of a solid catalyst component] and prepolymerization were performed by a method similar to Example 1.

[Propylene polymerization (liquid phase polymerization reaction)]

Homopolymerization of propylene was performed using a loop reactor having a total internal volume of 30 L. Propylene, hydrogen, triethylaluminum, cyclohexylethyldimethoxysilane, diethylzinc, and the slurry of the prepolymerized catalyst component prepared above were continuously supplied to a reactor, and polymerization was performed in a full liquid state without presence of a gas phase. Reaction conditions were as follows: polymerization temperature: 70°C, pressure: 4.4 MPaG, supply amount of propylene: 156 kg/hr, supply amount of hydrogen: 101.4 NL/hr, supply amount of triethylaluminum: 36.8 mmol/hr (hexane solution), supply amount of cyclohexylethyldimethoxysilane: 5.5 mmol/hr (hexane solution), diethyl zinc: 200 mmol/hr (hexane solution), and supply amount of slurry of prepolymerized catalyst component (in terms of solid catalyst component): 0.61 g/hr. Note that a single introducing line was used for supplying diethyl zinc to a reactor. The amount of a propylene polymer material 4 continuously discharged from the reactor was 1.9 kg/hr and was continuously transferred to a post-treatment step. While the obtained propylene polymer material 4 was continuously received, nitrogen at 60°C was circulated for two hours at a flow rate of 20 Nm$^3$/h, and nitrogen at 60°C was further circulated for one hour at a flow rate of 20 Nm$^3$/h to perform drying. Thereafter, contact with undried air containing oxygen and water was performed. Results thereof are presented in Tables 1 to 11.

<Example 5: Manufacture of propylene polymer material 5>

[Preparation of solid catalyst component] and [Prepolymerization]

Preparation of a solid catalyst component] and prepolymerization were performed by a method similar to Example 1.

[Propylene polymerization (liquid phase polymerization reaction)]

Homopolymerization of propylene was performed using a loop reactor having a total internal volume of 30 L. Propylene, triethylaluminum, cyclohexylethyldimethoxysilane, diethylzinc, and the slurry of the prepolymerized catalyst component prepared above were continuously supplied to a reactor, and polymerization was performed in a full liquid state without presence of a gas phase. Reaction conditions were as follows: polymerization temperature: 70°C, pressure: 4.4 MPaG, supply amount of propylene: 78 kg/hr, supply amount of triethylaluminum: 36.8 mmol/hr (hexane solution), supply amount of cyclohexylethyldimethoxysilane: 5.5 mmol/hr (hexane solution), diethyl zinc: 200 mmol/hr (hexane solution), and supply amount of slurry of prepolymerized catalyst component (in terms of solid catalyst component): 0.58 g/hr. Note that a single introducing line was used for supplying diethyl zinc to a reactor. The amount of a propylene polymer material 5 continuously discharged from the reactor was 1.4 kg/hr and was continuously transferred to a post-treatment step. While the obtained propylene polymer material 5 was continuously received, nitrogen at 60°C was circulated for two hours at a flow rate of 20 Nm³/h, and nitrogen at 60°C was further circulated for one hour at a flow rate of 20 Nm³/h to perform drying. Thereafter, contact with undried air containing oxygen and water was performed. Results thereof are presented in Tables 1 to 12.

<Example 6: Manufacture of propylene polymer material 6>

[Preparation of solid catalyst component]

Preparation of a solid catalyst component] and prepolymerization were performed by a method similar to Example 1.

[Prepolymerization]

Into an SUS autoclave having an internal volume of 3 L and equipped with a stirrer, 1.75 L of n-hexane, 43.8 mmol of triethylaluminum (hexane solution), and 5.7 mmol of cyclohexylethyldimethoxysilane (hexane solution), which had been sufficiently dehydrated and degassed, were put. Into the autoclave, 26.4 g of the olefin polymerization solid catalyst component prepared above was added, and 92.4 g of propylene was continuously supplied thereto over about 40 minutes while the temperature in the autoclave was maintained at about 3 to 10°C to perform prepolymerization. Thereafter, a prepolymerization slurry was transferred to an SUS autoclave having an internal volume of 200 L and equipped with a stirrer, 132 L of sufficiently purified liquid butane was added thereto to prepare a slurry of the prepolymerized catalyst component, and the slurry was stored at a temperature of 10°C or lower.

[Propylene polymerization (liquid phase polymerization reaction)]

Homopolymerization of propylene was performed using a loop reactor having a total internal volume of 30 L. Propylene, hydrogen, triethylaluminum, cyclohexylethyldimethoxysilane, diethylzinc, and the slurry of the prepolymerized catalyst component prepared above were continuously supplied to a reactor, and polymerization was performed in a full liquid state without presence of a gas phase. Reaction conditions were as follows: polymerization temperature: 70°C, pressure: 4.4 MPaG, supply amount of propylene: 78 kg/hr, supply amount of hydrogen: 155.0 NL/hr, supply amount of triethylaluminum: 36.8 mmol/hr (hexane solution), supply amount of cyclohexylethyldimethoxysilane: 5.5 mmol/hr (hexane solution), diethyl zinc: 52 mmol/hr (hexane solution), and supply amount of slurry of prepolymerized catalyst component (in terms of solid catalyst component): 0.58 g/hr. Note that a single introducing line was used for supplying diethyl zinc to a reactor. The amount of a propylene polymer material 6 continuously discharged from the reactor was 1.4 kg/hr and was continuously transferred to a post-treatment step. While the obtained propylene polymer material 6 was continuously received, nitrogen at 60°C was circulated for two hours at a flow rate of 20 Nm³/h, and nitrogen at 60°C was further circulated for one hour at a flow rate of 20 Nm³/h to perform drying. Thereafter, contact with undried air containing oxygen and water was performed. Results thereof are presented in Tables 1 to 12.

<Example 7: Manufacture of propylene polymer material 7>

[Preparation of solid catalyst component] and [Prepolymerization]

Preparation of a solid catalyst component] and prepolymerization were performed by a method similar to Example 1.

[First-stage propylene polymerization (liquid phase polymerization reaction)]

Homopolymerization of propylene was performed using a loop reactor having a total internal volume of 30 L. Propylene, hydrogen, triethylaluminum, cyclohexylethyldimethoxysilane, and the slurry of the prepolymerized catalyst component prepared above were continuously supplied to a reactor, and polymerization was performed in a full liquid state without presence of a gas phase. Reaction conditions were as follows: polymerization temperature: 70°C, pressure: 4.4 MPaG, supply amount of propylene: 78 kg/hr, supply amount of hydrogen: 50.8 NL/hr, supply amount of triethylaluminum: 36.8 mmol/hr (hexane solution), supply amount of cyclohexylethyldimethoxysilane: 5.5 mmol/hr (hexane solution), and supply amount of slurry of prepolymerized catalyst component (in terms of solid catalyst component): 0.57 g/hr. The amount of the propylene polymer component (A) continuously discharged from the reactor was 3.5 kg/hr. The obtained slurry containing the propylene polymer component (A) was continuously transferred to a reactor of a second step without being deactivated.

[Second-stage propylene polymerization (gas phase polymerization reaction)]

Homopolymerization of propylene was performed using a gas phase fluidized bed reactor having an internal volume of 1.4 m$^3$ and equipped with a stirrer. Under conditions that propylene, hydrogen, and nitrogen were supplied such that a propylene polymer material holding amount in the fluidized bed of 24 kg, a polymerization temperature of 83°C, a polymerization pressure of 1.95 MPaG, a gas superficial velocity of 0.19 m/sec in the reactor, a hydrogen concentration of 0.19 mol% in a gas phase, and a propylene concentration of 95.7 mol% were maintained and diethyl zinc: 200 mmol/hr (hexane solution) was supplied, a slurry containing the propylene polymer component (A) continuously discharged from the reactor was continuously polymerized. Note that a single introducing line was used for supplying diethyl zinc to a reactor. The amount of a propylene polymer material 7 continuously discharged from the reactor was 10.6 kg/hr and was continuously transferred to a post-treatment step. While the obtained propylene polymer material 7 was continuously received, nitrogen at 60°C was circulated for two hours at a flow rate of 20 Nm$^3$/h, and nitrogen at 60°C was further circulated for one hour at a flow rate of 20 Nm$^3$/h to perform drying. Thereafter, contact with undried air containing oxygen and water was performed to obtain a propylene polymer material 7-A. In addition, while continuously receiving the obtained propylene polymer material 7, nitrogen at 60°C was circulated for two hours at a flow rate of 20 Nm$^3$/h, and nitrogen at 60°C was further circulated for one hour at a flow rate of 20 Nm$^3$/h and to dry the propylene polymer material 7. Thereafter, a powder was obtained under nitrogen, a degassed excess amount of ethanol was introduced thereinto, and the mixture was allowed to stand at room temperature for 15 hours, and then dried to obtain a propylene polymer material 7-B. Results thereof are presented in Tables 1 to 12.

<Comparative Example 1: Manufacture of propylene polymer material C1>

[Preparation of solid catalyst component] and [Prepolymerization]

Preparation of a solid catalyst component] and prepolymerization were performed by a method similar to Example 6.

[Propylene polymerization (liquid phase polymerization reaction)]

Homopolymerization of propylene was performed using a loop reactor having a total internal volume of 30 L. Propylene, hydrogen, triethylaluminum, cyclohexylethyldimethoxysilane, and the slurry of the prepolymerized catalyst component prepared above were continuously supplied to a reactor, and polymerization was performed in a full liquid state without presence of a gas phase. Reaction conditions were as follows: polymerization temperature: 70°C, pressure: 4.4 MPaG, supply amount of propylene: 78 kg/hr, supply amount of hydrogen: 209.9 NL/hr, supply amount of triethylaluminum: 36.8 mmol/hr (hexane solution), supply amount of cyclohexylethyldimethoxysilane: 5.5 mmol/hr (hexane solution), and supply amount of slurry of prepolymerized catalyst component (in terms of solid catalyst component): 1.27 g/hr. The amount of a propylene polymer material C1 continuously discharged from the reactor was 8.8 kg/hr and was continuously transferred to a post-treatment step. While the obtained propylene polymer material C1 was continuously received, nitrogen at 60°C was circulated for two hours at a flow rate of 20 Nm$^3$/h, and nitrogen at 60°C was further circulated for one hour at a flow rate of 20 Nm$^3$/h to perform drying. Thereafter, contact with undried air containing oxygen and water was performed. Results thereof are presented in Tables 1 to 12. That is, in Comparative Example 1, an organozinc compound was not supplied.

<Comparative Example 2: Manufacture of propylene polymer material C2>

[Preparation of solid catalyst component]

Preparation of a solid catalyst component] and prepolymerization were performed by a method similar to Example 1.

[Propylene polymerization (slurry polymerization reaction)]

The inside of a stainless steel autoclave having an internal volume of 0.4 liters and equipped with a stirrer was depressurized. Thereafter, 100 g of propylene was added thereto. Subsequently, a mixture of 0.5 mmol of triethylaluminum (hexane solution) and 0.5 mmol of cyclohexylethyldiethoxysilane (heptane solution) was added thereto. Subsequently, a mixture of 0.8 mmol of diethylzinc (hexane solution) and 4.4 mg of the solid catalyst component prepared above was added thereto, and propylene was polymerized at 70°C. After 60 minutes, the polymerization was stopped by purging unreacted propylene. Contact with undried air containing oxygen and water was performed, and then drying was performed under reduced pressure at 80°C for one hour to obtain 19.6 g of a propylene polymer material C2. That is, Comparative Example 2 is not a continuous process. Results thereof are presented in Tables 1 to 12.

<Comparative Example 3: Manufacture of propylene polymer material C3>

[Preparation of solid catalyst component]

Preparation of a solid catalyst component] and prepolymerization were performed by a method similar to Example 1.

[Propylene polymerization (slurry polymerization reaction)]

Propylene was polymerized in a similar manner to Comparative Example 2 except that the amount of the solid catalyst component prepared above was changed from 4.4 mg to 7.3 mg and the polymerization time was changed from 60 minutes to 180 minutes, and the polymerized propylene was dried at 80°C for one hour under reduced pressure to obtain 79.0 g of a propylene polymer material C3. That is, Comparative Example 3 is not a continuous process. Results thereof are presented in Tables 1 to 12.

<Comparative Example 4: Manufacture of propylene polymer material C4>

[Preparation of solid catalyst component]

Preparation of a solid catalyst component] and prepolymerization were performed by a method similar to Example 1.

[Propylene polymerization (slurry polymerization reaction)]

The inside of a stainless steel autoclave having an internal volume of 3 L and equipped with a stirrer was depressurized, and then a mixture of 10 mL of heptane, 2.6 mmol of triethylaluminum (hexane solution), 0.26 mmol of cyclohexylethyldiethoxysilane (heptane solution), and 36.3 mg of the solid catalyst component prepared in Example 1 was added thereto. Thereafter, 780 g of propylene was added into the autoclave, and then 10.9 mmol of diethyl zinc (hexane solution) was added thereto to polymerize propylene at 80°C. After 60 minutes, the polymerization was stopped by purging unreacted propylene. Contact with undried air containing oxygen and water was performed, and then drying was performed under reduced pressure at 80°C for one hour to obtain 276.65 g of a propylene polymer material C4. That is, Comparative Example 4 is not a continuous process. Results thereof are presented in Tables 1 to 12.

<Comparative Example 5: Manufacture of propylene polymer material C5>

The inside of a stainless steel autoclave having an internal volume of 3 L and equipped with a stirrer was depressurized. Thereafter, 0.034 MPa of a hydrogen gas was added thereto, and a mixture of 10 mL of heptane, 2.6 mmol (hexane solution) of triethylaluminum, 0.26 mmol of cyclohexylethyldiethoxysilane (heptane solution), and 11.6 mg of the solid catalyst component prepared in Example 1 was added thereto. Thereafter, 780 g of propylene was added into the autoclave, and then 1.50 mmol of diethyl zinc (hexane solution) was added thereto to polymerize propylene at 80°C. After 60 minutes, the polymerization was stopped by purging unreacted propylene, and the pressure in the autoclave was reduced. An $O_2$ gas (0.054 MPa) was introduced thereinto, and the resulting mixture was allowed to stand for 30 minutes. Thereafter, the autoclave was opened, contact with undried air containing oxygen and water was performed, and then drying was performed under reduced pressure at 80°C for one hour to obtain 395.65 g of a propylene polymer material C5. That is, Comparative Example 5 is not a continuous process. Results thereof are presented in Tables 1 to 12.

[Table 1]

Table 1

| | n-Hexane | Triethylaluminum | Cyclohexylethyldimethoxysilane | Solid catalyst component | Propylene polymerization amount | Prepolymerization degree (ratio of propylene polymerization amount [g-PP (pre) to solid catalyst component [g-cat]) |
|---|---|---|---|---|---|---|
| | L | mmol | mmol | g-cat | g-PP (pre) | g-PP (pre)/g-cat |
| Example 1 | 1.53 | 30.7 | 4.0 | 13.2 | 46.2 | 3.5 |
| Example 2 | 1.53 | 30.7 | 4.0 | 13.2 | 46.2 | 3.5 |
| Example 3 | 1.53 | 30.7 | 4.0 | 13.2 | 46.2 | 3.5 |
| Example 4 | 1.53 | 30.7 | 4.0 | 13.2 | 46.2 | 3.5 |
| Example 5 | 1.53 | 30.7 | 4.0 | 13.2 | 46.2 | 3.5 |
| Example 6 | 1.75 | 43.8 | 5.7 | 26.4 | 92.4 | 3.5 |
| Example 7 | 1.53 | 30.7 | 4.0 | 13.2 | 46.2 | 3.5 |
| Comparative Example 1 | 1.75 | 43.8 | 5.7 | 26.4 | 92.4 | 3.5 |

[Table 2]

Table 2

| | Temperature | Pressure | Supply rate of solid catalyst component | Supply rate of propylene | Supply rate of hydrogen | Supply rate of triethylaluminum | Supply rate of cyclohexylethyld imethoxysilane | Supply rate of diethylzinc | Average residence time of propylene polymer material in reactor |
|---|---|---|---|---|---|---|---|---|---|
| | °C | MPaG | g/hr | kg/hr | NL/hr | mmol/hr | mmol/hr | mmol/hr | hour |
| Example 1 | 70.0 | 4.4 | 0.570 | 78.0 | 49.4 | 36.8 | 5.5 | 200.3 | 0.157 |
| Example 2 | 69.9 | 4.4 | 0.579 | 78.0 | 100.9 | 36.8 | 5.5 | 103.3 | 0.157 |
| Example 3 | 69.9 | 4.4 | 0.597 | 39.1 | 24.2 | 36.8 | 5.5 | 200.8 | 0.326 |
| Example 4 | 70.0 | 4.4 | 0.611 | 156.0 | 101.4 | 36.8 | 5.5 | 199.6 | 0.078 |
| Example 5 | 69.9 | 4.4 | 0.576 | 78.0 | 0.0 | 36.8 | 5.5 | 200.9 | 0.154 |
| Example 6 | 69.9 | 4.4 | 1.232 | 77.9 | 155.0 | 36.8 | 5.5 | 51.8 | 0.157 |
| Example 7 | 69.9 | 4.4 | 0.602 | 78.0 | 50.8 | 36.8 | 5.5 | 0.0 | 0.156 |
| Comparative Example 1 | 69.9 | 4.4 | 1.274 | 77.9 | 209.9 | 36.8 | 5.5 | 0.0 | 0.162 |

[Table 3]

[Table 3]

Table 3

| | Temperature | Pressure | Propylene polymer material holding amount | Gas superficial velocity | Hydrogen concentration | Propylene concentration | Supply rate of diethylzinc | Average residence time of propylene polymer material in reactor |
|---|---|---|---|---|---|---|---|---|
| Unit | °C | MPaG | kg | m/s | mol% | mol% | mmol/hr | hour |
| Example 7 | 83.0 | 1.9 | 22.7 | 0.19 | 0.19 | 95.7 | 199.9 | 2.14 |

[Table 4]

Table 4

|  | Generation rate of propylene polymer component in loop reactor | Generation rate of propylene polymer component in gas phase fluidized bed reactor | Total generation rate of propylene polymer material |
|---|---|---|---|
| Abbreviation | PP (A) | PP (B) | PP (Total) |
| Unit | kg/hr | kg/hr | kg/hr |
| Example 1 | 3.6 | - | 3.6 |
| Example 2 | 4.2 | - | 4.2 |
| Example 3 | 7.4 | - | 7.4 |
| Example 4 | 1.9 | - | 1.9 |
| Example 5 | 1.4 | - | 1.4 |
| Example 6 | 8.7 | - | 8.7 |
| Example 7 | 3.5 | 7.1 | 10.6 |
| Comparative Example 1 | 8.8 | - | 8.8 |

[Table 5]

Table 5

|  | Limiting viscosity of propylene polymer component generated in loop reactor | Limiting viscosity of propylene polymer component generated in gas phase fluidized bed reactor | Limiting viscosity of propylene polymer material obtained through entire process |
|---|---|---|---|
| Abbreviation | $[\eta]$ A | $[\eta]$ B | $[\eta]$ T |
| Unit | dL/g | dL/g | dL/g |
| Example 1 | 1.3 | - | 1.3 |
| Example 2 | 1.2 | - | 1.4 |
| Example 3 | 1.2 | - | 1.2 |
| Example 4 | 1.5 | - | 1.5 |
| Example 5 | 2.2 | - | 2.2 |
| Example 6 | 1.4 | - | 1.4 |
| Example 7 (7-A) | 2.0 | 0.9 | 1.3 |
| Example 7 (7-B) | 2.0 | 0.9 | 1.4 |
| Comparative Example 1 | - | - | 1.4 |
| Comparative Example 2 | - | - | 1.8 |
| Comparative Example 3 | - | - | 2.5 |

(continued)

| | Limiting viscosity of propylene polymer component generated in loop reactor | Limiting viscosity of propylene polymer component generated in gas phase fluidized bed reactor | Limiting viscosity of propylene polymer material obtained through entire process |
|---|---|---|---|
| Comparative Example 4 | - | - | 1.3 |
| Comparative Example 5 | - | - | 1.5 |

[Table 6]

Table 6

| | Supply amount of titanium atoms derived from solid catalyst component | Supply amount of aluminum atoms derived from triethylaluminum | Supply amount of zinc atoms derived from diethylzinc | Total polymerization degree of propylene |
|---|---|---|---|---|
| Abbreviation | f-Ti | f-Al | f-Zn | PP (Total)/cat |
| Unit | mmol/hr | mmol/hr | mmol/hr | g-PP (Total)/g-cat |
| Example 1 | 0.19 | 38.6 | 200.3 | 6386 |
| Example 2 | 0.19 | 40.5 | 103.3 | 7219 |
| Example 3 | 0.20 | 37.8 | 200.8 | 12982 |
| Example 4 | 0.20 | 38.4 | 199.6 | 3368 |
| Example 5 | 0.19 | 39.0 | 200.9 | 2431 |
| Example 6 | 0.41 | 37.7 | 51.8 | 7062 |
| Example 7 | 0.20 | 38.4 | 199.9 | 17625 |
| Comparative Example 1 | 0.43 | 38.6 | 0.0 | 6907 |

[Table 7]

Table 7

| | Supply amount ratio of zinc atoms/titanium atoms | Supply amount ratio of zinc atoms/ aluminum atoms | Supply amount ratio of aluminum atoms/ titanium atoms |
|---|---|---|---|
| | f-Zn/f-Ti | f-Zn/f-Al | f-Al/f-Ti |
| Unit | mmol-Zn/mmol-Ti | mmol-Zn/mmol-Al | mmol-Zn/mmol-Al |
| Example 1 | 1053 | 5.2 | 203.2 |
| Example 2 | 518 | 2.5 | 209.8 |
| Example 3 | 1053 | 5.2 | 203.2 |
| Example 4 | 1053 | 5.2 | 203.2 |
| Example 5 | 1042 | 5.1 | 203.1 |

(continued)

|  | Supply amount ratio of zinc atoms/titanium atoms | Supply amount ratio of zinc atoms/ aluminum atoms | Supply amount ratio of aluminum atoms/ titanium atoms |
|---|---|---|---|
|  | f-Zn/f-Ti | f-Zn/f-Al | f-Al/f-Ti |
| Example 6 | 121 | 1.3 | 91.5 |
| Example 7 | 995 | 5.2 | 191.0 |
| Comparative Example 1 | 0 | 0 | 90.6 |

[Table 8]

Table 8

|  |  | Ratio of supply amount of titanium atoms derived from solid catalyst component to generation rate of propylene polymer material (reaction tank containing organozinc) | Ratio of supply amount of aluminum atoms derived from triethylaluminum to generation rate of propylene polymer material (reaction tank containing organozinc) | Ratio of supply amount of zinc atoms derived from diethylzinc to generation rate of propylene polymer material (reaction tank containing organozinc) |
|---|---|---|---|---|
| Abbreviation | | f-Ti/PP | f-Al/PP | f-Zn/PP |
| Unit | | mmol-Ti/kg-PP | mmol-Al/kg-PP | mmol-Zn/kg-PP |
| Example 1 | | 5.22E-2 | 11 | 55 |
| Example 2 | | 4.62E-2 | 10 | 24 |
| Example 3 | | 2.57E-2 | 5 | 27 |
| Example 4 | | 9.90E-2 | 20 | 104 |
| Example 5 | | 1.37E-1 | 28 | 143 |
| Example 6 | | 4.74E-2 | 4 | 6 |
| Example 7 | | 2.84E-2 | 5 | 28 |
| Comparative Example 1 | | 4.84E-2 | 4 | 0 |

[Table 9]

Table 9

|  | Weight average molecular weight in terms of propylene | Number average molecular weight in terms of propylene | Ratio of weight average molecular weight in terms of propylene to number average molecular weight in terms of propylene |
|---|---|---|---|
|  | Mw | Mn | Mw/Mn |
| Unit | g/mol | g/mol | - |
| Example 1 | 174926 | 51269 | 3.4 |
| Example 2 | 193750 | 49685 | 3.9 |
| Example 3 | 143167 | 45197 | 3.2 |
| Example 4 | 206052 | 53618 | 3.8 |
| Example 5 | 330211 | 89364 | 3.7 |

(continued)

|  | Weight average molecular weight in terms of propylene | Number average molecular weight in terms of propylene | Ratio of weight average molecular weight in terms of propylene to number average molecular weight in terms of propylene |
|---|---|---|---|
|  | Mw | Mn | Mw/Mn |
| Example 6 | 198290 | 46042 | 4.3 |
| Example 7 (7-A) | 153859 | 38676 | 4.0 |
| Example 7 (7-B) | 180444 | 46596 | 3.9 |
| Comparative Example 1 | 204125 | 38254 | 5.3 |
| Comparative Example 2 | 285120 | 54648 | 5.2 |
| Comparative Example 3 | 462000 | 80520 | 5.7 |
| Comparative Example 4 | 173474 | 27377 | 6.3 |

[Table 10]

Table 10

|  | Cold xylene soluble component amount | Melt flow rate | Melting point | Static bulk density |
|---|---|---|---|---|
|  | CXS | MFR | Tm | SBD |
| Unit | wt% | g/10 min | °C | g/mL |
| Example 1 | 0.28 | 25.7 | 163.1 | 0.430 |
| Example 2 | 0.29 | 18.7 | 163.1 | 0.425 |
| Example 3 | 0.22 | 52.9 | 162.6 | 0.449 |
| Example 4 | 0.34 | 13.7 | 163.6 | 0.412 |
| Example 5 | 0.48 | 3.3 | 164.1 | 0.437 |
| Example 6 | 0.29 | 15.4 | 162.9 | 0.431 |
| Example 7 (7-A) | 0.26 | 29.3 | 161.9 | 0.466 |
| Comparative Example 1 | 0.26 | 15.6 | 163.3 | 0.432 |
| Comparative Example 2 | - | - | 162.3 | - |
| Comparative Example 3 | - | - | 163.4 | - |
| Comparative Example 4 | - | - | 161.3 | - |

[Table 11]

Table 11

|  | L* | a* | b* | Color difference | Chroma |
|---|---|---|---|---|---|
|  |  |  |  | ΔE*ab | C* |
| Example 1 | 90.42 | -0.32 | 1.13 | 3.58 | 1.17 |
| Example 2 | 91.56 | -0.34 | 1.26 | 2.44 | 1.31 |
| Example 3 | 90.22 | -0.30 | 0.85 | 3.82 | 0.90 |
| Example 4 | 89.68 | -0.43 | 1.21 | 4.31 | 1.28 |

(continued)

|  | L* | a* | b* | Color difference | Chroma |
|---|---|---|---|---|---|
|  |  |  |  | ΔE*ab | C* |
| Example 5 | 88.97 | -0.49 | 0.87 | 5.06 | 1.00 |
| Example 6 | 91.86 | -0.35 | 1.16 | 2.15 | 1.21 |
| Example 7 (7-A) | 90.45 | -0.22 | 0.89 | 3.59 | 0.92 |
| Comparative Example 1 | 91.67 | -0.21 | 1.06 | 2.36 | 1.08 |
| Comparative Example 2 | - | - | - | - | - |
| Comparative Example 3 | - | - | - | - | - |
| Comparative Example 4 | 87.85 | -0.75 | 4.22 | 6.7 | 4.3 |

[Table 12]

Table 12

|  | Ratio of number of organic metal-containing terminal groups to number of starting terminals of propylene polymer material | Ratio of number of organic metal-containing terminal groups to number of starting terminals of specific high molecular weight fraction of propylene polymer material | (B)/(A) |
|---|---|---|---|
| Example 1 | 0.041 | 0.070 | 1.7 |
| Example 5 | 0.146 | 0.126 | 0.86 |
| Example 7 (7-A) | 0.094 | 0.067 | 0.71 |
| Example 7 (7-B) | 0.0 | - | - |
| Comparative Example 5 | 0.30 | 0.11 | 0.37 |

From the results of Examples 1, 5, and 7A in Table 12, it is found that a propylene polymer material having a hydroxy group terminal is generated by treating a polymer material having an organic metal-containing terminal group with an oxygen gas and water.

From the result of Example 7B in Table 12, it is found that a saturated terminal propylene polymer material in which an organic metal-containing terminal group is protonated is generated by treating a polymer material having an organic metal-containing terminal group with an active proton compound (ethanol).

From the result of Example 7A in Table 12, it is found that the propylene polymer material in the scope of claim 8 is generated by the manufacturing method described in the present application.

From the result of Comparative Example 5 in Table 12, it is found that the propylene polymer material in the scope of claim 8 is not generated by a known manufacturing method.

INDUSTRIAL APPLICABILITY

The propylene polymer material of the present invention can be molded into a component of a product such as an electric product or an automobile by a molding method such as an injection molding method, an injection compression molding method, a gas assist molding method, or an extrusion molding method. Specifically, for example, the propylene polymer material of the present invention is suitably used for applications such as various automobile interior and exterior parts such as an instrument panel, a glove box, trims, housings, a pillar, a bumper, a fender, and a backdoor, as well as various parts of home appliances, various housing equipment parts, various industrial parts, and various building material parts. The propylene polymer material of the present invention has high applicability in various industry fields such as transportation machinery industry, electrical and electronic industry, and building and construction industry. Among these applications, the propylene polymer material of the present invention is particularly preferably used for an automobile part such as a door trim, a pillar, an instrument panel, or a bumper.

**Claims**

1. A method for manufacturing a propylene polymer material, the method comprising:

   a continuous supply step of continuously supplying propylene, an olefin polymerization solid catalyst component, an organoaluminum compound, and an organozinc compound to a reactor; and
   a continuous extraction step of continuously extracting a part of a propylene polymer material obtained in the reactor from the reactor.

2. The method for manufacturing a propylene polymer material according to claim 1, wherein a supply rate of the organozinc compound in the continuous supply step to a generation rate of the propylene polymer material in the continuous extraction step is 20 to 1000 (mmol-Zn/kg-PP).

3. The method for manufacturing a propylene polymer material according to claim 1 or 2, wherein a supply rate of the organozinc compound to a supply rate of the organoaluminum compound is 1.1 to 15 (mol-Zn/mol-Al) in the continuous supply step.

4. The method for manufacturing a propylene polymer material according to any one of claims 1 to 3, wherein a supply rate of the organoaluminum compound in the continuous supply step to a generation rate of the propylene polymer material in the continuous extraction step is 1 to 30 (mmol-Al/kg-PP).

5. The method for manufacturing a propylene polymer material according to any one of claims 1 to 4, wherein the olefin polymerization solid catalyst component contains a titanium atom and a magnesium atom.

6. The method for manufacturing a propylene polymer material according to any one of claims 1 to 5, wherein the organoaluminum compound and the organozinc compound are continuously supplied to the reactor using separate lines in the continuous supply step.

7. The method for manufacturing a propylene polymer material according to any one of claims 1 to 6, wherein a hydrogen gas is further continuously supplied to the reactor in the continuous supply step.

8. A propylene polymer material having (A) of 0.010 or more and (B)/(A) of 0.40 or more in the following (A) and (B):

   (A) A ratio of the number of organic metal-containing terminal groups to the number of starting terminals of the propylene polymer materials
   (B) A ratio of the number of organic metal-containing terminal groups to the number of starting terminals of a specific high molecular weight fraction of the propylene polymer material

9. The propylene polymer material according to claim 8, satisfying the following requirement (b):
   (b) Mw/Mn is 2.5 to 4.5.

10. A terminal-stabilized polymer material corresponding to the propylene polymer material according to claim 8 or 9.

11. The propylene polymer material according to any one of claims 8 to 10, further satisfying the following requirement (f):
    (f) A color difference $\Delta E^*ab$ between the propylene polymer material and a standard white board in an L*a*b* color space is 0 to 10.

12. The propylene polymer material according to any one of claims 8 to 11, further satisfying the following requirement (g):
    (g) A value of chroma C* in an L*a*b* color space is 0 to 4.0.

13. The propylene polymer material according to any one of claims 8 to 12, further satisfying the following requirement (h):
    (h) A value of a coordinate b* in an L*a*b* color space is -1.0 to 3.0.

14. A method for manufacturing the propylene polymer material according to claims 1 to 7, the method comprising

copolymerizing an olefin other than propylene with propylene, wherein
a content of the olefin unit other than propylene is 0.01 to 10 wt% with respect to 100 wt% of the copolymer.

15. The method for manufacturing a propylene polymer material according to claims 1 to 7, wherein the number of polymerization steps is two or more, and propylene is polymerized in at least one of the steps.

16. The propylene polymer material according to claims 8 to 13, wherein

the propylene polymer material is a copolymer obtained by copolymerizing an olefin other than propylene with propylene, and
a content of the olefin unit other than propylene is 0.01 to 10 wt% with respect to 100 wt% of the copolymer.

17. The propylene polymer material according to claims 8 to 13, wherein the number of polymerization steps is two or more, and the propylene polymer material is obtained by polymerizing propylene in at least one of the steps.

<div style="text-align:center">**INTERNATIONAL SEARCH REPORT**</div>

| | International application No. |
|---|---|
| | **PCT/JP2023/012416** |

### A.     CLASSIFICATION OF SUBJECT MATTER

*C08F 10/06*(2006.01)i; *C08F 4/654*(2006.01)i; *C08F 4/658*(2006.01)i
FI:     C08F10/06; C08F4/654; C08F4/658

According to International Patent Classification (IPC) or to both national classification and IPC

### B.     FIELDS SEARCHED

Minimum documentation searched (classification system followed by classification symbols)
C08F10/06; C08F4/654; C08F4/658

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C.     DOCUMENTS CONSIDERED TO BE RELEVANT

| Category* | Citation of document, with indication, where appropriate, of the relevant passages | Relevant to claim No. |
|---|---|---|
| X | JP 2001-192415 A (BAYER INC) 17 July 2001 (2001-07-17) | 1-4, 7-13 |
| | claim 1, paragraphs [0019], [0027], [0031], [0039]-[0054], examples 1-2, control examples | |
| A | | 5-6, 14-17 |
| X | JP 2013-506742 A (DOW GLOBAL TECHNOLOGIES INC) 28 February 2013 (2013-02-28) | 1-4, 7-17 |
| | claims 1, 3-6, paragraphs [0126]-[0221], example HH1 | |
| A | | 5-6 |
| A | JP 61-023607 A (TOKUYAMA SODA CO LTD) 01 February 1986 (1986-02-01) | 1-17 |
| | claim 1, example 2 | |
| A | JP 08-085711 A (IDEMITSU PETROCHEM CO LTD) 02 April 1996 (1996-04-02) | 1-17 |
| | claim 1, paragraphs [0023], [0031]-[0052] | |
| A | JP 2008-533276 A (DOW GLOBAL TECHNOLOGIES INC) 21 August 2008 (2008-08-21) | 1-17 |
| | claim 1, paragraph [0252] | |

☐ Further documents are listed in the continuation of Box C.       ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **14 June 2023** | **27 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/012416**

| Patent document cited in search report | | | Publication date (day/month/year) | Patent family member(s) | Publication date (day/month/year) |
|---|---|---|---|---|---|
| JP | 2001-192415 | A | 17 July 2001 | US 6384162 B1 claim 1, column 3, line 61 to column 4, line 16, column 5, lines 10-17, column 7, line 1 to column 8, line 67, examples 1-2, control examples EP 1113028 A1 CA 2292387 A1 | |
| JP | 2013-506742 | A | 28 February 2013 | US 2011/0082257 A1 claims 1, 3-7, paragraphs [0167]-[0262], example HH1 US 2012/0208961 A1 WO 2011/041696 A1 KR 10-2012-0082907 A CN 102712795 A | |
| JP | 61-023607 | A | 01 February 1986 | (Family: none) | |
| JP | 08-085711 | A | 02 April 1996 | EP 693524 A1 claim 1, p. 7, lines 41-43, p. 9, line 16 to p. 15, line 5 | |
| JP | 2008-533276 | A | 21 August 2008 | WO 2006/101596 A1 claim 1, p. 82, lines 18-23 KR 10-2007-0117675 A CN 101142246 A | |

Form PCT/ISA/210 (patent family annex) (January 2015)

**REFERENCES CITED IN THE DESCRIPTION**

**Patent documents cited in the description**

- JP 2001342210 A
- JP 2018531923 A
- JP 63142008 A
- JP 4227604 A
- JP 5339319 A
- JP 6179720 A
- JP 7116252 A
- JP 8134124 A
- JP 9031119 A
- JP 11228628 A
- JP 11080234 A
- JP 11322833 A

- JP 2021161216 A
- JP 2022031142 A
- JP 2010511634 A
- JP 2011506628 A
- JP 2013503647 A
- WO 2007055361 A
- JP 2017512246 A
- JP 2018522087 A
- JP 2019167424 A
- WO 2021006245 A
- JP 2009173870 A